# EUROPEAN PATENT SPECIFICATION

(11) **EP 2 772 780 B1**
(45) Date of publication and mention of the grant of the patent: **24.07.2019**
(21) Application number: 13156995.6
(22) Date of filing: 27.02.2013
(51) Int. Cl.: G02B 6/44

(54) **Pivot adapter for a fibre optic drawer**
Schwenkadapter für eine Glasfaserschublade
Adaptateur à pivot pour tiroir à fibres optiques

(43) Date of publication of application: 03.09.2014
(73) Proprietor: Corning Research & Development Corporation, Corning, New York 14831 (US)
(72) Inventor: Désard, Christophe, 44 410 Herbignac (FR)
(74) Representative: Epping - Hermann - Fischer

(56) References cited:
- DE-A1- 4 030 310
- FR-A1- 2 959 383
- US-A1- 2006 275 008
- US-B2- 6 808 315

## Description

The invention relates to fixation elements for fibre optic drawers, in particular to pivot adapters for such drawers and to fibre optic racks comprising such pivot adapters.

In fibre optic networks, fibre-optic elements like fibre splices, splitters, fibre optic connectors, or excess length of fibre or fibre slack are often accommodated in pivotable drawers disposed in a cabinet, a rack or a frame. From a fibre optic cable, individual fibres or groups of fibres are routed through the cabinet to the drawers, in which they are connected or spliced to other fibres, split, or stored and routed back inside the cabinet from the drawer to the same or a different fibre optic cable. Often, a plurality of such drawers is arranged in a rack of a fibre optic cabinet in a stacked manner, in order to save space in the cabinet. Each individual drawer can be pivoted about a pivot hinge defining a horizontal or vertical pivot axis into a position outside the stack of drawers, so that the drawer and the elements arranged in the drawer are accessible to an installer, for example. Usually, the pivot hinge for a drawer is arranged on a separate mechanical element, a pivot adapter, which is fixed to the rack in the cabinet, and which supports the pivotable drawer.

It is advantageous to route fibres from the cabinet into a pivotable drawer close to the pivot axis of the drawer. This routing generally reduces pull stress on the fibres, when the drawer is pivoted from a pivot-in position ("storage position") into a pivot-out position ("access position"), and/or reduces fibre slack when pivoting back. However, even if a fibre is routed into the drawer next to the pivot axis, the pivoting of the drawer still creates movement of the fibre in the vicinity of the pivot axis. Generally, the fibre routing path is designed such as to completely avoid pull stress, because this stress can destroy the fibre, reduce its optical performance or affect the optical connections disposed within the drawer. In order to eliminate the pull stress in conventional pivotable drawers, excess fibre slack is allowed in order to accommodate pivoting of the drawer.

Optical fibres must not be bent below a certain minimum bend radius. Hence, also the fibre slack generated in the vicinity of the pivot axis by pivoting a drawer must be accommodated such that the minimum bend radius is maintained.

The European Patent Application EP 0215668 A2 shows a possible approach: in the rack, the fibre routing path in the vicinity of the pivot axis is wide enough, so that the fibre slack generated by pivoting a tray can be accommodated in the fibre routing path. Similarly, it would be possible, to provide a wide-enough fibre routing path on the tray to accommodate fibre slack generated by pivoting. However, these solutions have disadvantages: Firstly, they require extra space for wider routing paths, and such space is scarce in many fibre optic cabinets and on many fibre optic drawers. Secondly, the fibres are routed only very loosely in such wide routing paths, which is often not desirable.

A similar approach is shown in the International Patent Application WO 95/23991. Fibres are routed from the interior of the cabinet through an opening in a side wall of the cabinet housing towards the pivot axis and further into a tray. In the vicinity of the pivot axis, both the routing path in the housing and the routing path in the drawer are very wide, so that these routing paths can accommodate fibre slack, generated by pivoting the drawer.

The German patent publication DE-A1-4030310 discloses a pivot adapter guiding the fibre from a rack to a pivotable drawer providing an increased well defined bend radius using moving guiding surfaces.

The French patent publication FR-A1-2959383 discloses a pivot adapter linking a rack with a fibre drawer with the adapter having a squared window opening for passing through fibres.
Therefore, providing a routing path for optical fibres towards a pivotable drawer which allows, upon pivoting, maintaining the minimum bend radius of the fibre, and which allows accommodating fibre slack, generated by pivoting, in a space-saving manner, appears desirable.

The present disclosure seeks to address this problem. This disclosure provides a pivot adapter for fixing a pivotable fibre optic drawer to a rack and for routing an optical fibre from the rack to the drawer, such that the drawer can be pivoted between a first pivot position outside the rack and a second pivot position inside the rack, the pivot adapter comprising
a) a pivot hinge support portion, for supporting a pivot hinge of the drawer, the pivot hinge defining a pivot axis, about which pivot axis the drawer can be pivoted between the first and the second pivot position, and
b) a fibre routing surface for routing the optical fibre towards the pivot axis, the fibre routing surface defining a first space on one side of the fibre routing surface, and a second space on the opposed side of the fibre routing surface,
   characterized in that the fibre routing surface comprises a displacement opening which allows a displacement of at least a part of a slack portion of the fibre for maintaining a minimum bending radius of the fibre, wherein the displacement is caused by the pivoting of the drawer, and wherein the displacement opening is adapted and arranged such that, when the drawer is pivoted, at least a part of a slack portion of the fibre can be displaced, through the displacement opening, from the first space into the second space.

The pivot adapter according to this disclosure addresses the above-mentioned problem by providing the displacement opening in the fibre routing surface of the pivot adapter, so that when the drawer is pivoted, fibre slack can give way and move, through the displacement opening, into the space on the other side of the routing surface. Because the fibre slack can give way, it is not forced into a radius which is smaller than the minimum bending radius.

In general, a pivotable fibre optic drawer is fixed to a rack via an intermediate mechanical element, a pivot adapter. The pivot adapter has a pivot hinge support portion, which is suitable for supporting a pivot hinge of the drawer. The pivot hinge may be comprised in the drawer, or it may be comprised in the pivot adapter. The pivot hinge may be a pivot pin, for example. Generally, the pivot hinge support portion may define the position and/or orientation of the pivot hinge, and the pivot hinge may define the pivot axis of the drawer, e.g. the position and orientation of the pivot axis. Thus, the pivot hinge support portion may define the pivot axis. In certain embodiments, the pivot adapter may have an elongated shape and comprise two opposed end portions. The pivot hinge support portion may be located at an end portion of the pivot adapter. The pivot adapter may be mountable in a rack such that, when mounted, a long direction of the pivot adapter extends essentially horizontally.

Generally, when mounted, the pivot hinge support portion may be arranged such that the drawer is pivotable horizontally, i.e. about a vertically oriented pivot axis. Alternatively, when mounted, the pivot hinge support portion may be arranged such that the drawer is pivotable vertically, i.e. about a horizontally oriented pivot axis.

In general, a fibre optic drawer may be suitable for accommodating fibre optic connectors, fibre optic connector couplings, splices, splitters, one or more fibre management trays, one or more fibre optic splice trays, fibre routing elements and/or fibre overlength. A fibre optic drawer may be larger than a fibre optic splice tray or a fibre optic management tray. In particular, a fibre optic drawer may be suitable for accommodating one or more fibre optic splice trays or one or more fibre optic management trays in it or on it. These fibre optic trays may themselves be pivotable relative to the fibre optic drawer about a tray pivot axis. Generally, the tray pivot axis may be oriented perpendicularly to the pivot axis of the drawer defined by the pivot hinge, e.g. horizontally.

The pivotable fibre optic drawer may be made from polymeric material in one single piece. At least a base, fibre routing elements and side walls of the drawer may be made from polymeric material in one single piece. In these cases, the drawer may comprise reinforcing ribs to stiffen the drawer and prevent deformation of the drawer by its own weight and by weight of elements mounted in the drawer. Reinforcing ribs may be comprised in the base, in the fibre routing elements and/or in the side walls.

The pivot adapter comprises a fibre routing surface, or it may comprise a plurality of fibre routing surfaces, for routing an optical fibre towards the pivot hinge support portion or towards the pivot axis of the fibre optic drawer. A fibre routing surface may be a flat surface. A first fibre routing surface may be arranged such that it is oriented essentially horizontally, when the pivot adapter is mounted in a rack. This arrangement is referred to as a "horizontal" arrangement of the first fibre routing surface, or a "horizontally arranged" or "horizontal" fibre routing surface. Similarly, a second fibre routing surface may be arranged such that it is oriented essentially vertically, when the pivot adapter is mounted in a rack. This arrangement is referred to as a "vertical" arrangement of the first fibre routing surface, or a "vertically arranged" or "vertical" fibre routing surface. A horizontal fibre routing surface may support the weight of the fibre. A vertical fibre routing surface may guide the fibre in horizontal directions. A vertically arranged fibre routing surface may comprise the displacement opening which allows a displacement of a slack portion of the fibre.

The pivot adapter may comprise one, two or more fibre routing surfaces. One, two or more of the fibre routing surfaces may comprise a respective displacement opening allowing displacement of a slack portion of a fibre routed by the fibre routing surface(s), upon pivoting of the drawer. The pivot adapter may be a single piece. It may alternatively be composed of a plurality of elements.

A fibre routing surface defines a first space on one side of the fibre routing surface, and a second space on the opposed side of the fibre routing surface. If the fibre routing surface comprises a wall, the wall separates the first space from the second space. The first space is on one side of the wall, and the second space is on the other side of the wall, i.e. on the opposed side of the wall. A displacement opening in the fibre routing surface may allow displacement of at least a part of a slack portion of a fibre through the displacement opening from the first space into the second space. The displacement opening in the fibre routing surface may allow displacement of at least a part of a slack portion of a fibre through the displacement opening from the second space into the first space. The displacement opening may provide a fibre routing path between the first space and the second space.

A fibre routing surface may be flat, plane, or curved. It may be structured. It may be continuous, except for the displacement opening for allowing displacement of a slack portion of the fibre, or it may be interrupted.

In one aspect of the disclosure, the fibre routing surface may be a plane surface. Such a fibre routing surface may be oriented such that the fibre routing surface is oriented vertically when the pivot adapter is mounted in the rack. Thereby the fibre routing surface provides sideway guidance to the fibre. This may be particularly advantageous for guiding a fibre towards a drawer that pivots horizontally. Horizontal pivoting often tends to push the fibre sideways, so that sideway fibre guiding may be important, in order to route fibres without violating their minimum bending radius and in a space-saving manner.

The pivot adapter may have an elongated shape. Such a shape may make guiding of fibres from the rear of the rack to the front of the rack and towards the pivot axis easier. The displacement opening may have an elongated shape. The long direction of the displacement opening may extend in a long direction of the pivot adapter. This arrangement may allow for a space-saving sideways displacement of at least a part of the slack portion of the fibre. The displacement opening may have a rectangular shape. This shape may help in providing a suitably-sized displacement opening for displacement in a direction perpendicular to the pivot axis (e.g. horizontally), while still providing some fibre guidance in directions parallel to the pivot axis (e.g. vertically). In particular, the displacement opening may extend, in at least one direction, for 10 centimeters or longer. If the displacement opening has the shape of a rectangle, a long side of the rectangle may have a length of about 5 centimeters to about 10 centimeters or more, and a short side of the rectangle may have a length of about 2 centimeters to about 1 centimeter or less. Such a shape may provide a good balance between vertical guidance of the fibre and sufficient opening size for allowing sufficient displacement of the fibre through the displacement opening tomaintain the minimum bending radius of the fibre.

The fibre routing surface may extend towards the pivot hinge support portion. This arrangement may facilitate guiding of the fibre towards the pivot axis and thereby may reduce the amount of fibre slack generated by pivoting the drawer. It also may allow for an arrangement of the displacement opening in the fibre routing surface such that a part of a slack portion of the fibre can be displaced through the displacement opening without generating much friction between the fibre and the fibre routing surface.

In certain embodiments, the fibre routing surface may be a plane, e.g. a flat wall. The pivot hinge support portion may define the pivot axis. The surface normal of the fibre routing surface may then be oriented perpendicularly with respect to the orientation of the pivot axis, defined by the pivot hinge support portion. In case of a vertically oriented pivot axis, such an arrangement may provide for efficient fibre routing in a horizontal, i.e. sideways direction. Such routing, in turn, may help in guiding the fibre towards the pivot axis in a space-saving manner. Also, it allows for horizontal displacement of at least a part of a slack portion of the fibre, i.e. in the plane of the drawer. This may save further space. Alternatively, the surface normal of the fibre routing surface may be oriented parallel to the direction of the pivot axis. Such an arrangement may provide for efficient fibre routing in a vertical direction, when the pivot axis is oriented vertically. If space is not available for horizontal displacement of a slack portion of the fibre, this alternative arrangement may allow for a vertical displacement.

In principle, displacement of a part of the slack portion of the fibre can be in a longitudinal direction, i.e. in the length direction of the fibre, or in a transverse direction, i.e. in a direction perpendicular to the length direction of the fibre. The displacement opening may, in certain embodiments of the disclosure, be arranged such that at least a part of a slack portion of the fibre can be displaced through the displacement opening in a transverse direction, perpendicular to a length direction of the fibre.

Generally, the pivot adapter may be adapted to permit, when mounted to the rack, pivoting of the drawer in a horizontal direction. Horizontal pivoting of the drawer may be advantageous in that the drawer remains in both the pivot-in and in the pivot-out position without additional means for holding it there. Horizontal pivoting may also allow easier access to the elements mounted on or in the drawer, e.g. from above. It may also allow for easier and quicker installation of elements on or in the drawer.

The pivot adapter may be adapted to permit, when mounted to the rack, pivoting of the drawer between the first and the second pivot position, i.e. between a pivot-out position and a pivot-in position, by a pivot angle of 90 degrees or more. A pivot angle of 90 degrees or more may be advantageous, because this may make the drawer and the elements mounted on or in it easily accessible to an installer.

The invention also provides a fibre optic rack for supporting one or more fibre optic drawers, the rack comprising a pivot adapter as described above, for fixing one or more of the fibre optic drawers to the rack. A pivot adapter according to this disclosure may allow a space-saving arrangement of pivotable drawers in the rack and may thus achieve a higher fibre connection density for the rack.

The invention also provides a fibre optic network comprising a fibre optic rack comprising a pivot adapter according to the present disclosure.

The invention will now be described in more detail with reference to the following Figures exemplifying particular embodiments of the invention:
- Figure 1:: Perspective top view of a drawer and a pivot adapter according to the disclosure;
- Figure 2:: Perspective view of the pivot adapter of Figure 1;
- Figure 3:: Perspective view of four drawers fixed to a rack by pivot adapters according to the disclosure;
- Figure 4:: Perspective view of an alternative pivot adapter on a part of a rack; and
- Figure 5:: Perspective view of an end portion of the pivot adapter of Figure 4.

Herein below various embodiments of the present invention are described and shown in the drawings wherein like elements are provided with the same reference numbers.

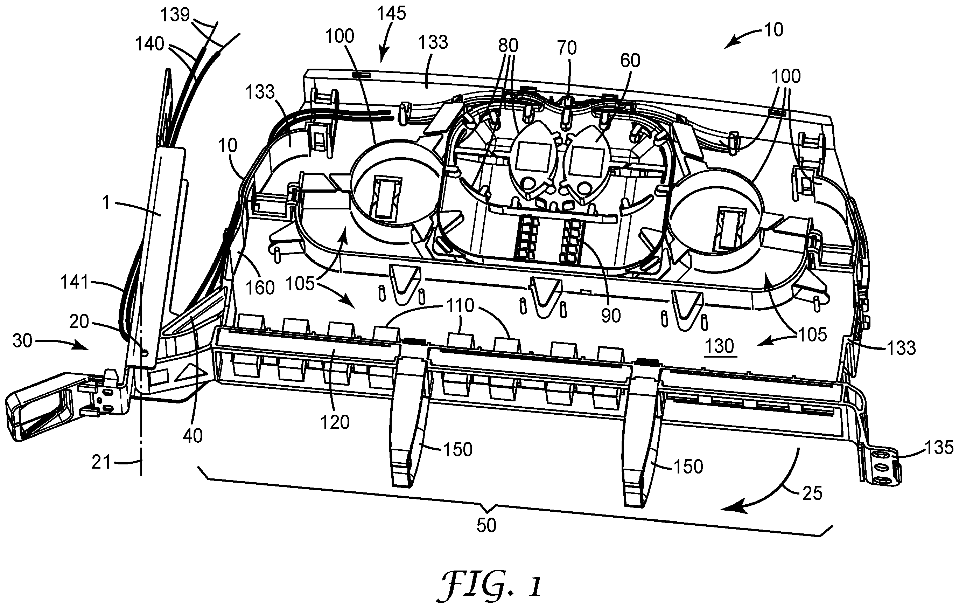

**Figure 1** shows, in a perspective top view, a pivot adapter 1, and a fibre optic drawer 10 supported by the pivot adapter 1. The fibre optic drawer 10 is pivotable about a pivot pin 20 in a direction indicated by arrow 25. Pivoting the drawer 10 in the direction of arrow 25 moves the drawer 10 from a pivot-in position (storage position) into a pivot-out position (access position). Figure 1 shows the drawer 10 in the storage position. The drawer 10 can also be pivoted back, from the pivot-out position into the pivot-in position shown in Figure 1. The pivot pin 20 is an example of a pivot hinge. The pivot pin 20 defines a pivot axis 21 of the drawer 10. The pivot pin 20 is arranged in a pivot pin support portion 30 of the pivot adapter 1. The drawer 10 comprises a drawer arm portion 40, which connects the pivot adapter 1 via the pivot pin 20 with the body portion 50 of the drawer 10. The drawer 10 supports a fibre splice tray 60, pivotably mounted by a tray hinge 70 on the drawer 10. An alternative drawer may support a plurality of splice trays 60, e.g. in a stacked arrangement. Space in the drawer 10 under the (single or lowest) splice tray 60 is used as fibre slack storage area 105. The fibre splice tray 60 comprises fibre guiding elements 80, which help preserve the minimum bending radius of a fibre routed on the fibre splice tray 60. The fibre splice tray 60 also comprises a splicing area 90, in which fibre optic splices can be accommodated. Generally, the splicing area 90 can be configured to accommodate one or a plurality of fusion splices or one or a plurality of mechanical splices.

A plurality of fibre guiding elements 100 or fibre routing elements 100, disposed in a slack storage area 105 of the drawer 10, facilitates routing of an optical fibre between different portions of the drawer 10, and from and to the fibre splice tray 60. A plurality of fibre optic connector couplings 110 is arranged in a front panel 120 of the drawer 10. For that purpose, the front panel 120 has slots that are configured to receive a plurality of optical connector couplings 110. Fibre optic connectors can be inserted into the couplings 110: connectors on optical jumper cables can be inserted from the front of the couplings 110, and connectors on fibre pigtails can be inserted from the back of the couplings 110, so that optical fibres, to which the connectors are optically connected, are optically connected with each other.

The drawer 10 is made as a single piece, except for the splice tray 60, the front guide rings 150 and the connector couplings 110. It is moulded from a polymeric material, specifically from a fibre glass reinforced thermoplastic, in this embodiment from PBT. The drawer 10 can be moulded e.g. by injection moulding. The drawer comprises a flat base 130 and a plurality of side walls 133, 160 extending from the base 130 and defining an internal space of the drawer 10. Fibre routing elements 100, arranged on the upper side of the base 130, extend from a top surface of the base 130. At the underside of the base 130, the drawer 10 is provided with stiffening ribs, which are not visible in Figure 1. These stiffening ribs provide mechanical rigidity to the drawer 10, making it resistant against distortions or bending. The drawer 10 is thereby rigid enough to not require a fixed horizontal support plate in the rack or in the interior of the cabinet, in which the rack and the drawer 10 are mounted, which support plate would keep and support the drawer 10 in a horizontal position when pivoted into the rack. Many conventional drawers are made from polymeric material and require such horizontal support plates in the cabinet, which are usually made of metal. The absence of such horizontal support plates reduces weight, reduces cost, and allows better access to the rear and to the bottom of the interior of the cabinet, when the drawer 10 is pivoted out into the access position. At an end of the front plate 120 of the drawer 10, opposite to the end next to the drawer arm portion 40, a securing plate 135 is arranged, by which the drawer 10 can be secured to a part of the rack in which it is mounted, such as to prevent pivoting of the drawer 10.

In general, incoming optical fibres are connected to outgoing optical fibres in the drawer 10. Figure 1 shows two exemplary incoming fibres 139, arranged in two fibre optic cables 140, respectively. Generally, a cable 140 can comprise one fibre 139 or a plurality of fibres 139. The cables 140 and the fibres 139 enter the drawer 10 at a cable entry portion 145 of the drawer 10 and are routed to the slack storage area 105 of the drawer 10. Routing of the cables 140 and the fibres 139 on the splice tray 60 and on the drawer 10 is not shown in Figure 1 for clarity. On a terminal portion of the cables 140, the cable jacket is removed to expose the optical fibres 139 contained therein. Individual fibres 139 of the cables 140 are routed into the fibre splice tray 60. In the splicing area 90, fibres 139 can be spliced to fibre pigtails. Fibre pigtails are preterminated with optical connectors on one end, opposite to the splice end. These fibre pigtails are routed from the fibre splice tray 60, e.g. via fibre routing elements 100 on the drawer 10, to the couplings 110. The connectors on the end of the fibre pigtails are inserted into the rear openings, oriented towards the interior of the drawer 10, of the couplings 110. A connector of an outgoing optical jumper cable (not shown) can be inserted into the front opening of a coupling 110. The outgoing cable can then be guided along the front side of the front panel 120, i.e. outside the drawer 10, sideways, through front guide rings 150, towards the drawer arm portion 40 and further into the rack.

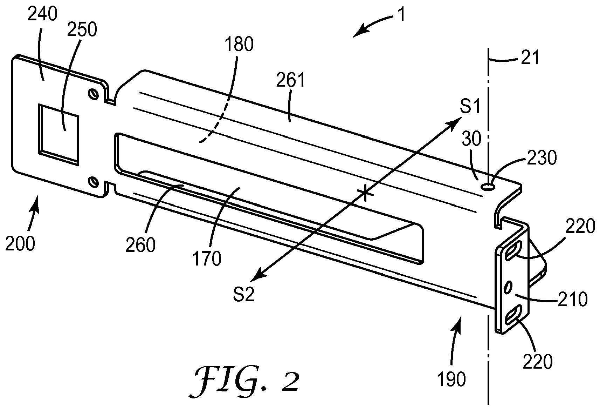

The drawer 10 is shown in a pivot-in position relative to the pivot adapter 1. In this position of the drawer 10, the space between the arm-side side wall 160 of the drawer 10 and the pivot adapter 1 is relatively small. The fibre optic cables 140 and the fibres 139 in it are routed from the rack along the pivot adapter 1 towards the pivot axis 21 defined by the pivot pin 20, and further to the drawer 10. In the vicinity of the pivot pin 20, the cables 140 and the fibres 139 in them are bent in order to be routed towards the cable entry portion 145 of the drawer 10. A fibre routing surface 180 of the pivot adapter 1 routes the fibres 139 and the cables 140 and guides them sidewise. A displacement opening 170 (shown in Figure 2) in the fibre routing surface 180, shown in Figure 2, allows displacement of at least a part of a slack portion 141 of fibres 139 in the fibre optic cables 140 through the displacement opening 170 towards the left (in Figure 1). The displacement of the slack portion 141 of the fibre optic cables 140 and the fibres 139 in them avoids violating the minimum bending radius of the cables 140 and the fibres 139 in the vicinity of the pivot axis 21.

The pivot adapter 1 is shown in greater detail in **Figure** 2 in a perspective view, without the drawer 10 mounted to it, without the pivot pin 20 and without the fibre optic cables 140. In the embodiment shown in Figure 2, the fibre routing surface 180 is a flat, thin wall. A fibre routing surface can have other shapes and other thicknesses. The pivot adapter 1 has an elongated shape, and it comprises the fibre routing surface 180, a first end portion 190, and a second end portion 200. The pivot pin support portion 30 of the pivot adapter 1 is located next to the first end portion 190. The first end portion 190 comprises a fixation plate 210 with two fixation openings 220, which serve to fix the pivot adapter 1 to a frame of a fibre optic cabinet. The fixation openings 220 are spaced such that the pivot adapter 1 can be fixed to a standardized 19-inch rack in a way that the drawer 10 can be pivoted horizontally.

The pivot pin support portion 30 comprises two collinear pin openings 230 for accommodating and supporting the pivot pin 20 in the pivot adapter 1. The upper pin opening 230 is visible on an upper wall 261 of the pivot adapter 1, the corresponding lower pin opening is arranged in a corresponding lower wall 260 of the pivot adapter 1 and therefore not visible in Figure 2. The pin openings 230 define the position and the orientation of the pivot pin 20, which in turn defines the pivot axis 21 of the drawer 10. The pivot pin support portion 30 thereby defines the pivot axis 21 of the drawer 10. The displacement opening 170 has a longitudinal shape. Its long extension extends in the long direction of the pivo adapter 1, and it is oriented such that it is perpendicular to the orientation of the pivot axis 21 defined by the pivot pin 20. In its long extension, the displacement opening 170 extends for about 10 centimeters. For mounting the drawer 1 in a rack, the pivot adapter 1 is fixed to the rack at its first end portion 190, using the fixation plate 210 and the fixation openings 220, for example by screws and nuts. The drawer 10 is pivotably mounted on the pivot adapter 1 via the pivot pin 20. The drawer 10 thus can be pivoted relative to the pivot adapter 1 and relative to the rack.

At its second end portion 200, the pivot adapter 1 comprises a fibre fixation plate 240, along which a fibre 139 or a cable 140 can be guided. The fibre fixation plate 240 comprises a fixation hole 250, which can be used for mechanically fixing an optical fibre 139 or a fibre optic cable 140 to the pivot adapter 1, e.g. by a cable tie.

The fibre routing surface 180 extends between the first end portion 190 and the second end portion 200, and defines a plane, which divides the space into a first space S1 and a second space S2. The first space S1 is located on one side of the fibre routing surface 180, namely on the side facing the drawer 10. The second space S2 is located on the opposed side of the fibre routing surface 180, i.e. on the side oriented towards the observer (i.e. the side facing away from the drawer 10) in Figure 2. The fibre routing surface 180 is a flat thin wall in the embodiment shown in Figures 1 and 2. Alternatively, the fibre routing surface 180 might be curved, so that the first space S1 and the second space S2 are separated by a curved surface. The fibre routing surface 180 is a wall in the embodiment shown in Figures 1 and 2. Alternatively, the fibre routing surface 180 may be a surface of a non-continuous fibre routing element, like, for example, a mesh or an open structure.

The displacement opening 170 in the fibre routing surface 180 has the shape of a longitudinal slot. In its long direction, the slot extends between the first end portion 190 and the second end portion 200 of the pivot adapter 1. Its long direction thus extends essentially in the direction in which optical fibres 139 or fibre optic cables 140 are routed from the second end portion 200 towards the pivot axis 21. The slot is long enough to allow for displacement of a slack portion of an optical fibre 139 or of a fibre optic cable 140 through the slot, without violating the minimum bending radius of the fibre 139 or the cable 140. In the short direction of the slot forming the displacement opening 170, the slot extends far enough to allow a slack portion of the fibre optic cable 140 to be displaced through the slot. The "height" of the slot, i.e. its extension in its short direction, is larger than the diameter of a cable 140 that is to be displaced through the displacement opening 170.

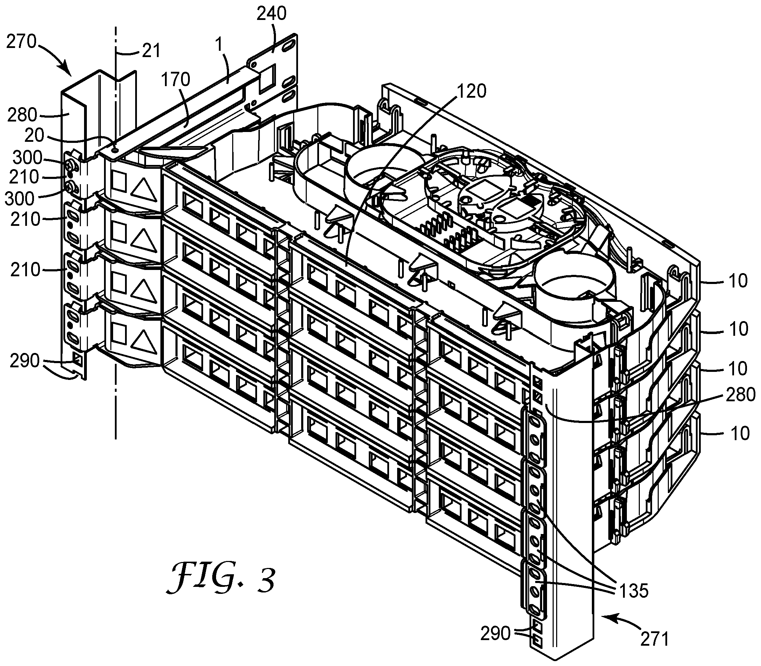

Looking at Figure 1 again, the distance between the arm-side side wall 160 of the drawer 10 and the pivot adapter 1 can be preferentially kept small by using the pivot adapter 1 which has a displacement opening 170 which allows a slack portion 141 of a fibre 139 or of a cable 140 to be displaced to the opposite side of the fibre routing surface 180, when the drawer 1 is pivoted into the pivot-in position shown in Figure 1. If the pivot adapter 1 had no such displacement opening 170, the distance between the arm-side side wall 160 and the pivot adapter 1 would need to be larger, so that the cable 140 could be accommodated in that space without being bent below its minimum bending radius. Because the drawer 10 and the pivot adapter 1 need to fit into the free width of a rack (i.e. between the struts 270, 271 shown in Figure 3), any space consumed by the pivot adapter 1 and the need to provide space for the minimum bend radius of the cable 140 would require the drawer 10 to be narrower, which would allow less fibre optic couplings 110 to be placed side by side at the front panel 120, resulting in a reduced connection density of the drawer 10, the rack and the cabinet, in which the rack is mounted.

In certain embodiments of the present disclosure, a portion of the fibre optic cable 140 or of an optical fibre 139 may extend through the displacement opening 170 even when the drawer 10 is in the pivot-out position. When pivoting the drawer 10 into the pivot-in position, the displacement opening 170 would then allow for displacement of a further portion of the cable 140 or of a fibre 139, e.g. slack portion 141, through the displacement opening 170 from the first space S1 into the second space S2.

**Figure 3** is a perspective view of four fibre optic drawers 10 fixed to a standard 19-inch rack. For clarity, only a part of the rack is shown, namely two vertical struts 270, 271 on the front of the rack. Both struts 270, 271 comprise flat front surfaces 280 with mounting holes 290 disposed therethrough, which are sized and arranged according to the standard for 19-inch racks. For each drawer 10, a separate pivot adapter 1 according to the present disclosure is fixed to the first strut 270 via screws 300 and nuts. Screws 300 are only shown for the topmost drawer 10. The pivot adapter 1 is similar to the one shown in Figures 1 and 2. Each drawer 10 can be pivoted horizontally about a vertical pivot axis 21 defined by a respective pivot pin 20. The position and orientation of each pivot pin 20 is in turn determined by the position and relative orientation of the pivot pin openings 230 in each pivot adapter 1. Figure 3 shows all drawers 10 in their pivot-in position. In this position, each drawer 10 can be secured in that position by fixing the front panel 120 on the side which is opposite to the side next to the pivot pin 20 by the securing plate 135 and suitable screws (not shown) to the second strut 271 of the rack. This prevents accidental pivoting of the drawer 10.

For some drawers 10, it may be advantageous to arrange the position of the pivot pin openings 230 such that the pivot axis 21 of the drawer 10 is tilted by an angle of 0.5°, 1° or 2° with respect to the vertical. This has been found to counter the effect of sagging of a drawer 10, so that the drawer 10 pivots into a suitable position, where the securing plate 135 and its screw hole pattern fits with the pattern of mounting holes 290 in the second strut 271. In the embodiment shown in Figure 3, the pivot pin support portion 30 would be adapted such as to support a pivot pin 20 in such a way that the upper end of the pivot pin 20 would be tilted towards the vertical strut 270, and such that the pivot axis 21, defined by the pivot pin 20, would thereby be tilted by an angle of between about 0.5° and about 5° with respect to the vertical.

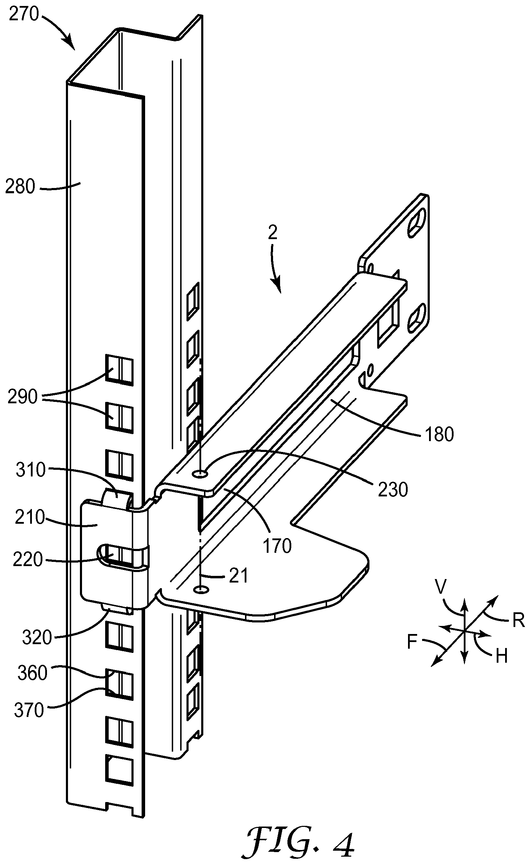

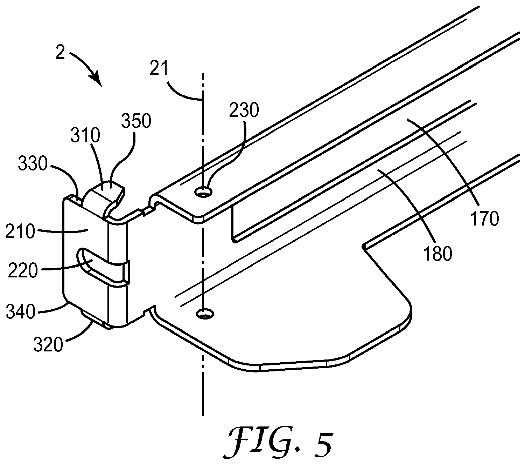

The pivot adapter 1 of Figures 1-3 has two fixation openings 220 for securing the pivot adapter 1 to the strut 270 of the frame by two screws 300. **Figure 4** shows, in a perspective view, a strut 270 of a rack and an alternative pivot adapter 2, which is identical to the pivot adapter 1 shown in Figures 1 to 3, except that the alternative pivot adapter 2 comprises a fixation plate 210 with a single fixation opening 220, for securing the pivot adapter 2 to the strut 270 by a single screw 300 (not shown). When mounting the pivot adapter 2 to the rack, first, the pivot adapter 2 is fixed to the strut 270 by two hooks 310, 320. It is not yet secured to the strut 270 by a screw 300. Once fixed to the strut 270 by the hooks 310, 320, the pivot adapter 2 is secured to the strut 270 by a screw 300 and a nut. **Figure 5** is a perspective view of the first end portion 190 of the pivot adapter 2 of Figure 4 without the strut 270. The pivot adapter 2 comprises, at its fixation plate 210, an upper hook 310 and a corresponding lower hook 320. The terms "upper" and "lower" refer to the pivot adapter 2 when mounted horizontally in a rack. When the pivot adapter 2 is fixed to the rack, the pivot axis 21, defined by the pivot pin support portion 30 and the pivot pin 20, has a vertical orientation. This orientation is shown in Figures 4 and 5. Horizontal directions and vertical directions are indicated by arrows "H" and "V", respectively. Front directions and rearward directions are indicated by arrows "F" and "R", respectively.

The upper hook 310 extends from an upper edge 330 of the fixation plate 210 and is for engagement with an upper mounting hole 290 in the strut 270, the lower hook 320 extends from a lower edge 340 of the fixation plate 210 and is for engagement with a lower mounting hole 290. The upper hook 310 is arranged above the fixation opening 220. The lower hook 320 is arranged below the fixation opening 220. When the fixation plate 210 lies in a vertical plane, the upper and lower hooks 310, 320 extend horizontally from the fixation plate 210, i.e. perpendicularly from the fixation plate 210. When the fixation plate 210 is oriented parallel to the front surface 280 of the strut 270, the hooks 310, 320 extend, parallel to each other, towards a rear direction R and can thus be inserted into corresponding mounting holes 290 of the strut 270. The upper surface 350 of the upper hook 310 and the lower surface (not visible in Figures 4 and 5) of the lower hook 320 are spaced from each other such that, after insertion into corresponding mounting holes 290 of the strut 270, the upper surface 350 of the upper hook 310 is in tight fit with the upper edge 360 of the fixation opening 290 in which it is inserted, and such that the lower surface of the lower hook 320 is in tight fit with the lower edge 370 of the mounting hole 290 in which it is inserted. The tight fit fixes the pivot adapter 2 in a vertical direction V with respect to the strut 270 before the pivot adapter 2 is secured to the strut 270 by a screw 300. Relative to the fixation opening 220, the hooks 310, 320 are arranged such that when the hooks 310, 320 are inserted into corresponding mounting holes 290, the fixation opening 220 is aligned with a corresponding mounting hole 290 in the strut 270. This alignment makes positioning of a screw 300 for fixing the pivot adapter 2 quicker and easier.

Furthermore, the width of the hooks 310, 320, measured in a horizontal direction H along the upper edge 330 of the fixation plate 210, is identical to the inner width of the corresponding mounting holes 290. After insertion, this provides a tight fit in a horizontal direction H. Thereby, after insertion into corresponding mounting holes 290, the hooks 310, 320 and the pivot adapter 2 cannot move in a horizontal direction H. After inserting the hooks 310, 320 into their corresponding mounting holes 290, the position of the pivot adapter 2 in a horizontal direction H and in a vertical direction V is fixed. Thereby, the fixation opening 220 is aligned with a corresponding mounting hole 290, so that a screw 300 can be pushed through the fixation opening 220 and the mounting hole 290 for securing the pivot adapter 2 to the strut 270 and to the rack via the screw 300 and a nut.

Insertion of the hooks 310, 320 into corresponding mounting holes 290 is facilitated by the hooks 310, 320 having a front portion which is tapered in a horizontal direction H.

## Claims

1. Pivot adapter (1, 2) for fixing a pivotable fibre optic drawer (10) to a rack and for routing an optical fibre (139) from the rack to the drawer (10), such that the drawer (10) can be pivoted between a first pivot position outside the rack and a second pivot position inside the rack, the pivot adapter (1, 2) comprising
a) a pivot hinge support portion (30), for supporting a pivot hinge (20) of the drawer (10), the pivot hinge (20) defining a pivot axis (21), about which pivot axis (21) the drawer (10) can be pivoted between the first and the second pivot position, and
b) a fibre routing surface (180) for routing the optical fibre (139) towards the pivot axis (21), the fibre routing surface (180) defining a first space (S1) on one side of the fibre routing surface (180), and a second space (S2) on the opposed side of the fibre routing surface (180),
**characterized in that**
the fibre routing surface (180) comprises a displacement opening (170), which allows a displacement of at least a part of a slack portion (141) of the fibre (139) for maintaining a minimum bending radius of the fibre (139),
wherein the displacement is caused by the pivoting of the drawer (10), and wherein the displacement opening (170) is adapted and arranged such that, when the drawer (10) is pivoted, at least a part of a slack portion (141) of the fibre (139) can be displaced, through the displacement opening (170), from the first space (S1) into the second space (S2),
wherein the pivot adapter (1, 2) has an elongated shape, and wherein the displacement opening (170) has an elongated shape, and wherein a long direction of the displacement opening (170) extends in a long direction of the pivot adapter (1, 2), wherein the fibre routing surface (180) extends towards the pivot hinge support portion (30), wherein the fibre routing surface (180) is a plane, and wherein a surface normal of the fibre routing surface (180) is oriented perpendicularly with respect to the pivot axis (21), defined by the pivot hinge support portion (30).

2. Pivot adapter (1, 2) according to claim 1, wherein the fibre routing surface (180) is a plane surface, oriented vertically when the pivot adapter (1, 2) is mounted in the rack.

3. Pivot adapter (1, 2) according to any one of the preceding claims, wherein the displacement opening (170) is arranged such that at least a part of a slack portion (141) of the fibre (139) can be displaced through the displacement opening (170) in a transverse direction, perpendicular to a length direction of the fibre (139).

4. Pivot adapter (1, 2) according to any one of the preceding claims, wherein the displacement opening (170) has a rectangular shape.

5. Pivot adapter (1, 2) according to any one of the preceding claims, wherein the displacement opening (170) extends, in at least one direction, for 10 cm or longer.

6. Pivot adapter (1, 2) according to any one of the preceding claims, wherein the pivot adapter (1, 2) is adapted to permit, when mounted in a rack, pivoting of the drawer (10) between the first and the second pivot position by a pivot angle of 90 degrees or more.

7. Pivot adapter (1, 2) according to any one of the preceding claims, wherein the pivot adapter (1, 2) is adapted to permit, when mounted in a rack, pivoting of the drawer (10) in a horizontal direction.

8. Fibre optic rack for supporting one or more fibre optic drawers (10), the rack comprising a pivot adapter (1, 2) according to any one of claims 1 to 7 for fixing one or more of the fibre optic drawers (10) to the rack.

9. Fibre optic network comprising a fibre optic rack according to claim 8.

## Patentansprüche

1. Schwenkadapter (1, 2) zum Fixieren einer schwenkbaren Glasfaserschublade (10) an einem Gestell und zum Leiten einer Glasfaser vom Gestell zur Schublade (10), so dass die Schublage (10) zwischen einer ersten Schwenkposition außerhalb des Gestells und einer zweiten Position innerhalb des Gestells verschwenkt werden kann, wobei der Schwenkadapter (1, 2) umfasst:
a) einen Schwenkgelenkhalterungsabschnitt (30), um ein Schwenkgelenk (20) der Schublade (10) zu stützen, wobei das Schwenkgelenk (20) eine Schwenkachse (21) definiert, um welche Schwenkachse (21) die Schublade (10) zwischen der ersten und der zweiten Position verschwenkt werden kann, und
b) eine Faser-Leitfläche (180) zum Leiten der Glasfaser (139) zur Schwenkachse (21), wobei die Faser-Leitfläche (180) einen ersten Raum (S1) auf einer Seite der Faser-Leitfläche (180) und einen zweiten Raum (S2) auf der entgegengesetzten Seite der Faser-Leitfläche (180) definiert,
**dadurch gekennzeichnet, dass**
die Faser-Leitfläche (180) eine Verlagerungsöffnung (170) umfasst, die eine Verlagerung zumindest eines Teils eines losen Abschnitts (141) der Faser (139) ermöglicht, um einen Mindestbiegeradius der Faser (139) aufrechtzuerhalten, wobei die Verlagerung durch das Verschwenken der Schublade (10) bewirkt wird, und wobei die Verlagerungsöffnung (170) so angepasst und angeordnet ist, dass, wenn die Schublade (10) verschwenkt wird, zumindest ein Teil eines losen Abschnitts (141) der Faser (139) durch die Verlagerungsöffnung (170) hindurch aus dem ersten Raum (S1) in den den zweiten Raum (S2) verlagert werden kann,
wobei der Schwenkadapter (1, 2) eine langgestreckte Form hat, und wobei die Verlagerungsöffnung (170) eine langgestreckte Form hat, und wobei sich eine Längenrichtung der Verlagerungsöffnung (170) in einer Längenrichtung des Schwenkadapters (1, 2) erstreckt, wobei sich die Faser-Leitfläche (180) zum Schwenkgelenkhalterungsabschnitt (30) hin erstreckt, wobei die Faser-Leitfläche (180) eine Ebene ist, und wobei eine senkrechte Fläche der Faser-Leitfläche (180) senkrecht in Bezug auf die durch den Schwenkgelenkhalterungsabschnitt (30) definierte Schwenkachse (21) ausgerichtet ist.

2. Schwenkadapter (1, 2) nach Anspruch 1, wobei die Faser-Leitfläche (180) eine ebene Fläche ist, die vertikal ausgerichtet ist, wenn der Schwenkadapter (1, 2) im Gestell angebracht ist.

3. Schwenkadapter (1, 2) nach einem der vorhergehenden Ansprüche, wobei die Verlagerungsöffnung (170) so angeordnet ist, dass zumindest eine Teil eines losen Abschnitts (141) der Faser (139) durch die Verlagerungsöffnung (170) hindurh in einer Querrichtung senkrecht zu einer Längsrichtung der Faser (139) verlagert werden kann.

4. Schwenkadapter (1, 2) nach einem der vorhergehenden Ansprüche, wobei die Verlagerungsöffnung (170) eine rechteckige Form hat.

5. Schwenkadapter (1, 2) nach einem der vorhergehenden Ansprüche, wobei sich die Verlagerungsöffnung (170) in mindestens einer Richtung um 10 cm oder länger erstreckt.

6. Schwenkadapter (1, 2) nach einem der vorhergehenden Ansprüche, wobei der Schwenkadapter (1, 2) dazu angepasst ist, wenn er in einem Gestell angebracht ist, ein Verschwenken der Schublade (10) zwischen der ersten und der zweiten Position um ein Schwenkwinkel von 90 Grad oder mehr zuzulassen.

7. Schwenkadapter (1, 2) nach einem der vorhergehenden Ansprüche, wobei der Schwenkadapter (1, 2) dazu angepasst ist, wenn er in einem Gestell angebracht ist, ein Verschwenken der Schublade (10) in einer horizontalen Richtung zuzulassen.

8. Glasfasergestell zum Stützen einer oder mehrerer Glasfaserschublade/n (10), wobei das Gestell einen Schwenkadapter (1, 2) nach einem der Ansprüche 1 bis 7 zum Fixieren einer oder mehrerer Glasfaserschublade/n (10) am Gestell umfasst.

9. Glasfasernetzwerk, das ein Glasfasergestell nach Anpruch 8 umfasst.

## Revendications

1. Adaptateur à pivot (1, 2) destiné à fixer un tiroir pivotable à fibre optique (10) à un bâti et à acheminer une fibre optique (139) du bâti au tiroir (10), de telle sorte que le tiroir (10) puisse être pivoté entre une première position de pivot à l'extérieur du bâti et une deuxième position de pivot à l'intérieur du bâti, l'adaptateur à pivot (1, 2) comprenant
a) une portion support de charnière de pivot (30), destinée à supporter une charnière de pivot (20) du tiroir (10), la charnière de pivot (20) définissant un axe de pivot (21), autour duquel axe de pivot (21) le tiroir (10) peut être pivoté entre la première et la deuxième position de pivot, et
b) une surface d'acheminement de fibre (180) destinée à acheminer la fibre optique (139) vers l'axe de pivot (21), la surface d'acheminement de fibre (180) définissant un premier espace (S1) d'un côté de la surface d'acheminement de fibre (180), et un deuxième espace (S2) du côté opposé de la surface d'acheminement de fibre (180),
**caractérisé en ce que**
la surface d'acheminement de fibre (180) comprend une ouverture de déplacement (170), laquelle permet un déplacement d'au moins une partie d'une portion détendue (141) de la fibre (139) pour maintenir un rayon de courbure minimum de la fibre (139), sachant que le déplacement est causé par le pivotement du tiroir (10), et sachant que l'ouverture de déplacement (170) est adaptée et agencée de telle sorte que, lorsque le tiroir (10) est pivoté, au moins une partie de la portion détendue (141) de la fibre (139) puisse être déplacée, à travers l'ouverture de déplacement (170), du premier espace (S1) au deuxième espace (S2),
sachant que l'adaptateur à pivot (1, 2) a une forme allongée, et sachant que l'ouverture de déplacement (170) a une forme allongée, et sachant qu'une direction longue de l'ouverture de déplacement (170) s'étend dans une direction longue de l'adaptateur à pivot (1, 2), sachant que la surface d'acheminement de fibre (180) s'étend vers la portion support de charnière de pivot (30), sachant que la surface d'acheminement de fibre (180) est un plan, et sachant qu'une surface normale de la surface d'acheminement de fibre (180) est orientée perpendiculairement par rapport à l'axe de pivot (21), définie par la portion support de charnière de pivot (30).

2. Adaptateur à pivot (1, 2) selon la revendication 1, sachant que la surface d'acheminement de fibre (180) est une surface plane, orientée verticalement lorsque l'adaptateur à pivot (1, 2) est monté dans le bâti.

3. Adaptateur à pivot (1, 2) selon l'une quelconque des revendications précédentes, sachant que l'ouverture de déplacement (170) est agencée de telle sorte qu'au moins une partie d'une portion détendue (141) de la fibre (139) puisse être déplacée à travers l'ouverture de déplacement (170) dans une direction transversale, perpendiculaire à une direction de longueur de la fibre (139).

4. Adaptateur à pivot (1, 2) selon l'une quelconque des revendications précédentes, sachant que l'ouverture de déplacement (170) a une forme rectangulaire.

5. Adaptateur à pivot (1, 2) selon l'une quelconque des revendications précédentes, sachant que l'ouverture de déplacement (170) s'étend, dans au moins une direction, sur 10 cm ou plus.

6. Adaptateur à pivot (1, 2) selon l'une quelconque des revendications précédentes, sachant que l'adaptateur à pivot (1, 2) est adapté pour permettre, lorsqu'il est monté dans un bâti, le pivotement du tiroir (10) entre la première et la deuxième position de pivot à raison d'un angle de pivot de 90 degrés ou plus.

7. Adaptateur à pivot (1, 2) selon l'une quelconque des revendications précédentes, sachant que l'adaptateur à pivot (1, 2) est adapté pour permettre, lorsqu'il est monté dans un bâti, le pivotement du tiroir (10) dans une direction horizontale.

8. Bâti à fibre optique destiné à supporter un ou plusieurs tiroirs à fibre optique (10), le bâti comprenant un adaptateur à pivot (1, 2) selon l'une quelconque des revendications 1 à 7 pour fixer un ou plusieurs des tiroirs à fibre optique (10) au bâti.

9. Réseau de fibre optique comprenant un bâti à fibre optique selon la revendication 8.
